# EUROPÄISCHE PATENTSCHRIFT

(11) **EP 3 031 699 B1**
(45) Veröffentlichungstag und Bekanntmachung des Hinweises auf die Patenterteilung: **11.04.2018**
(21) Anmeldenummer: 15186142.4
(22) Anmeldetag: 22.09.2015
(51) Int. Cl.: B62D 5/093, A01B 69/00, B62D 1/22

(54) **LENKSYSTEM FÜR EIN LANDWIRTSCHAFTLICHES FAHRZEUG**
STEERING SYSTEM FOR AN AGRICULTURAL VEHICLE
SYSTÈME DE DIRECTION POUR UN VÉHICULE AGRICOLE

(30) Priorität: 09.12.2014 DE 102014118229
(43) Veröffentlichungstag der Anmeldung: 15.06.2016
(73) Patentinhaber: CLAAS Selbstfahrende Erntemaschinen GmbH, 33428 Harsewinkel (DE)
(72) Erfinder: Krause, Thilo, 39249 Glinde (DE); Fischer, Frédéric, 59823 Arnsberg (DE); Irmer, Daniel, 33442 Herzebock-Clarholz (DE); Sundermeier, Phillipp, 33129 Delbrück (DE); Jütte, Sebastian, 33129 Delbrück (DE); Meiners, Detlev, 33428 Marienfeld (DE); Kriebel, Bastian, 48155 Münster (DE)

(56) Entgegenhaltungen:
- EP-A2- 2 020 169
- DE-A1-102005 035 171

## Beschreibung

Die Erfindung betrifft ein Lenksystem für ein landwirtschaftliches Fahrzeug mit den Merkmalen des Oberbegriffs von Anspruch 1.

Landwirtschaftliche Fahrzeuge wie etwa Mähdrescher weisen regelmäßig ein hydrostatisches Lenksystem auf. Ein herkömmliches solches hydrostatisches Lenksystem basiert auf dem Prinzip, dass der Lenksignalgeber, also etwa ein Lenkrad, mit einem hydraulischen Lenkventil mechanisch verbunden wird, welches je nach Betätigungsgrad ein bestimmtes Volumen an von einer Hydraulikpumpe bereitgestelltem Öl einem Lenkzylinder zuführt und diesen damit druckbeaufschlagt. Entsprechend diesem Volumen an Öl und in Abhängigkeit davon, in welche Richtung der Lenkzylinder druckbeaufschlagt wird, verändert der Lenkkolben des Lenkzylinders seine Auslenkung, wodurch die Achsschenkellenkung betätigt wird und sich der Radeinschlagwinkel des landwirtschaftlichen Fahrzeugs einstellt. Solche hydraulischen Lenkventile, welche mechanisch durch das Lenkrad betätigt werden und daher eine festes Lenkübersetzung - hier und nachfolgend als Zusammenhang zwischen dem Betätigungsgrad des Lenksignalgebers und der Verstellung der Lenkzylinder definiert - aufweisen, werden insbesondere als Orbitrole bezeichnet.

Aus dem Stand der Technik und speziell aus der DE 10 2005 025 966 A1 und der DE 10 2005 035 171 A1 ist es weiter bekannt, zusätzlich zu einem solchen Orbitrol ein elektrohydraulisches Ventil vorzusehen, welches von einem Steuermodul elektrisch ansteuerbar ist und entweder unabhängig zu dem Orbitrol oder gleichzeitig mit dem Orbitrol in gleicher Weise die Lenkzylinder mit Öl druckbeaufschlagen kann, mit der Folge der entsprechenden Änderung des Radeinschlagwinkels. Eine unabhängige solche Ansteuerung durch das Steuermodul kann zur Verwirklichung einer Autopilotfunktion verwendet werden, sodass also der Radeinschlagwinkel gemäß einer Sollfahrspur nachgeregelt wird, ohne dass das Lenkrad oder das Orbitrol betätigt werden. Mittels einer gleichzeitigen Druckbeaufschlagung des Lenkzylinders durch das Orbitrol und durch das elektrohydraulische Ventil kann hingegen einerseits die Lenkübersetzung erhöht werden und andererseits auch die Zeit verkürzt werden, welche zum Erreichen eines bestimmten Radeinschlagwinkels durch die Räder des landwirtschaftlichen Fahrzeugs benötigt wird. Dies liegt daran, dass dann sowohl das Orbitrol als auch das elektrohydraulische Ventil den Lenkzylinder, ggf. mit jeweils eigener Pumpe, druckbeaufschlagen. Eine solche Unterstützung des Lenkvorgangs wird auch als "Fast Steering" bezeichnet.
Ebenso ist es aus dem Stand der Technik bekannt, das elektrohydraulische Ventil für diese Art der Lenkunterstützung zuzuschalten, wenn das Lenkrad entweder besonders rasch - im Sinne einer Winkelgeschwindigkeit - oder um einen besonders großen Drehwinkel betätigt wird. Denn solche Situationen sind regelmäßig ein Anzeichen dafür, dass ein Wendemanöver mit einem möglichst kleinen Wendekreis durchgeführt werden soll, woraus das Erfordernis folgt, das Lenken durch das elektrohydraulische Ventil zu verstärken. Besonders im Vorgewende eines Feldes ist regelmäßig eine 180ºWende durch das Fahrzeug durchzuführen, um von einer Sollfahrspur durch den Bestandsbereich zur nächsten abzufahrenden Sollfahrspur durch den Bestandsbereich zu gelangen. Eine andere Variante sieht vor, dass der Bediener des Lenksystems das elektrohydraulische Ventil manuell für das Bereitstellen der Lenkunterstützung zuschaltet, z. B. beim Erreichen des Vorgewendebereiches.
Nachteilig an den Lenksystemen aus dem Stand der Technik ist jedoch einerseits, dass sie speziell auf solche Wendemanöver im Vorgewende zugeschnitten sind. Dies betrifft sowohl ihre spezielle Wirkung auf das Lenkverhalten als auch das auslösende Ereignis, z. B. also eine maximale Lenkradbetätigung für eine 180ºWende. Es sind aber auch weitere Situationen denkbar, in denen prinzipiell eine Veränderung des Lenkungsverhaltens sinnvoll ist, wobei diese Veränderung des Lenkungsverhaltens dann auch andere Anforderungen stellen kann als eine 180ºWende im Vorgewende.
Ausgehend von dem obigen Stand der Technik besteht die Aufgabe der Erfindung darin, ein bekanntes Lenksystem für ein landwirtschaftliches Fahrzeug so weiterzuentwickeln und zu verbessern, dass es flexibler und differenzierter auf unterschiedliche Situationen reagiert, in denen es auf ein verändertes Lenkverhalten ankommt.
Das obige Problem wird bei einem Lenksystem für ein landwirtschaftliches Fahrzeug gemäß dem Oberbegriff von Anspruch 1 durch die Merkmale des kennzeichnenden Teils von Anspruch 1 gelöst.

Wesentlich für die Erfindung ist die Erkenntnis, dass eine Anpassung des Lenkverhaltens bzw. des charakteristischen Verhaltens, mit dem ein Lenksignalgeber den Radeinschlagwinkel des landwirtschaftlichen Fahrzeugs einstellt - hier und nachfolgend als Einstellcharakteristik bezeichnet - nicht ausschließlich auf einem erkannten Lenkverhalten - im Sinne einer Betätigung des Lenksignalgebers - oder auf einem manuellen Auslöser basieren muss, sondern auch auf einem sensorisch erfassten Außensignal des landwirtschaftlichen Fahrzeug basieren kann. Unter dem Begriff des "Außensignals" ist vorliegend jedes Signal bzw. jede messbare Eigenschaft zu verstehen, welche nicht von dem landwirtschaftlichen Fahrzeug selbst im engeren Sinne stammt. So fallen etwa ein Betätigungsgrad oder eine Betätigungsgeschwindigkeit des Lenksignalgebers, der Radeinschlagwinkel, oder die Fahrgeschwindigkeit des landwirtschaftlichen Fahrzeugs nicht unter den vorliegenden Begriff des Außensignals.

Die vorschlagsgemäße, jedenfalls zusätzliche Berücksichtigung eines solchen Außensignals erlaubt einerseits eine automatisch und daher frühzeitige Aktivierung einer Anpassung der Einstellcharakteristik, also noch bevor die Lenkbewegung als solche vorgenommen wird. Andererseits wird es dadurch auch möglich, eine differenzierte, situationsabhängige solche Anpassung vorzunehmen, da nicht mehr einfach nur binär auf das Überschreiten eines Grenzwerts o. dgl. reagiert wird. Ein "Fast Steering" reagiert dann also unterschiedlich bzw. wird unterschiedlich aktiviert in Abhängigkeit von einer äußeren Situation.
Dabei kann eine solche Anpassung unterschiedliche Merkmale der Einstellcharakteristik betreffen. So kann die Lenkübersetzung im obigen Sinne angepasst werden, um eine größere Veränderung des Radeinschlagwinkels auch mit einem kleinen Betätigungsweg des Lenksignalgebers zu erreichen, was Gegenstand des Unteranspruchs 2 ist. Die Unteransprüche 3 und 7 betreffen jeweils die Anpassung des Wendekreisdurchmessers und der Einschlagwinkeleinstellzeit. Darunter ist hier und nachfolgend diejenige Zeit zu verstehen, innerhalb der sich der Radeinschlagwinkel des landwirtschaftlichen Fahrzeugs gemäß Vorgabe des Lenksignalgebers unter Berücksichtigung der Lenkübersetzung einstellt.

Die Erfindung sieht dabei vor, dass für eine Vielzahl von Situationen unterschiedliche Anpassungsparameter für die Einstellcharakteristik hinterlegt sind und diese dann je nach erkannter Situation angewandt werden.

Bei dem Hauptlenkventil kann es sich - wie der Unteranspruch 4 beschreibt - sowohl um ein mechanisches Ventil mit einer festen Ventilübersetzung - hier definiert als Verhältnis zwischen Betätigungsgrad des jeweiligen Ventils und Volumen an geförderter Hydraulikflüssigkeit - als auch um ein elektrohydraulisches Ventil mit einer an sich veränderlichen Ventilübersetzung handeln. In dem letztgenannten Fall kann ein zusätzliches Ventil zur Druckbeaufschlagung der Lenkzylinder entbehrlich sein.

Dagegen sehen die Unteransprüche 5 und 6 bevorzugt das Vorhandensein eines solchen zusätzlichen Ventils zur Anpassung der Einstellcharakteristik vor.

Eine im Unteranspruch 8 beschriebene und bevorzugte Möglichkeit zur Verringerung der Einschlagwinkeleinstellzeit besteht in einer Leistungserhöhung derjenigen Vorrichtung, z. B. einer Pumpe, welche den Druck für die Hydraulikflüssigkeit erzeugt.

Der Unteranspruch 9 beschreibt bevorzugte Arten von Sensoren zur Anwendung bei dem vorschlagsgemäßen Lenksystem.

Die Unteransprüche 10 bis 13 beschreiben verschiedene Umgebungszustände, deren Erfassung durch ein entsprechendes Außensignal besonders relevant für eine vorschlagsgemäße Anpassung der Einstellcharakteristik sind.

Schließlich betrifft der Unteranspruch 14 die Erfassung eines Außensignals von einem äußeren Arbeitsgerät des landwirtschaftlichen Fahrzeugs.
Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine schematische Ansicht eines vorschlagsgemäßen Lenksystems für ein landwirtschaftliches Fahrzeug,
- Fig. 2: eine schematische Ansicht eines landwirtschaftlichen Feldes, welches von einem landwirtschaftlichen Fahrzeug mit dem vorschlagsgemäßen Lenksystem der Fig. 1 bearbeitet wird und
- Fig.3: einen Vergleich zwischen einer Ausweichbewegung eines landwirtschaftlichen Fahrzeugs mit einem Lenksystem aus dem Stand der Technik und mit dem vorschlagsgemäßen Lenksystem der Fig. 1.

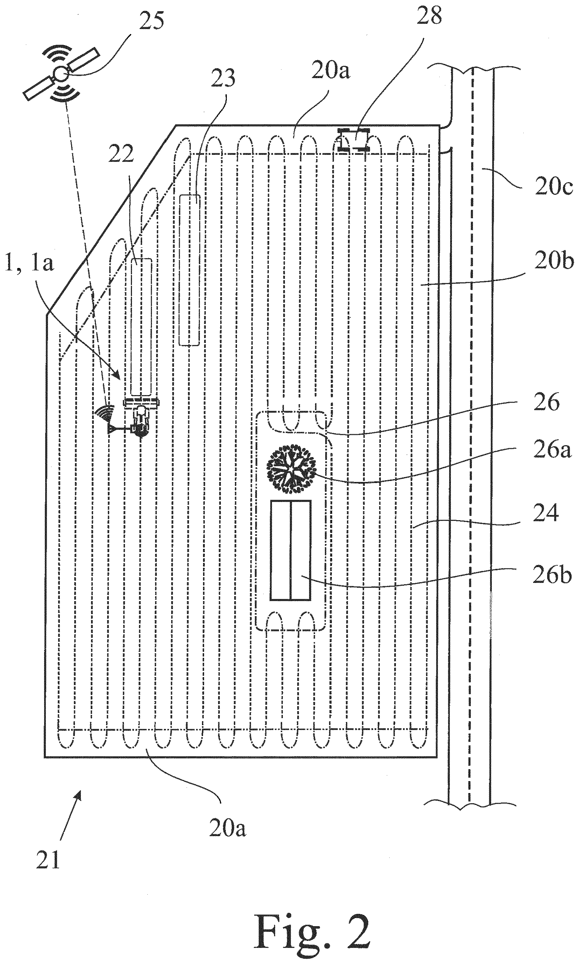

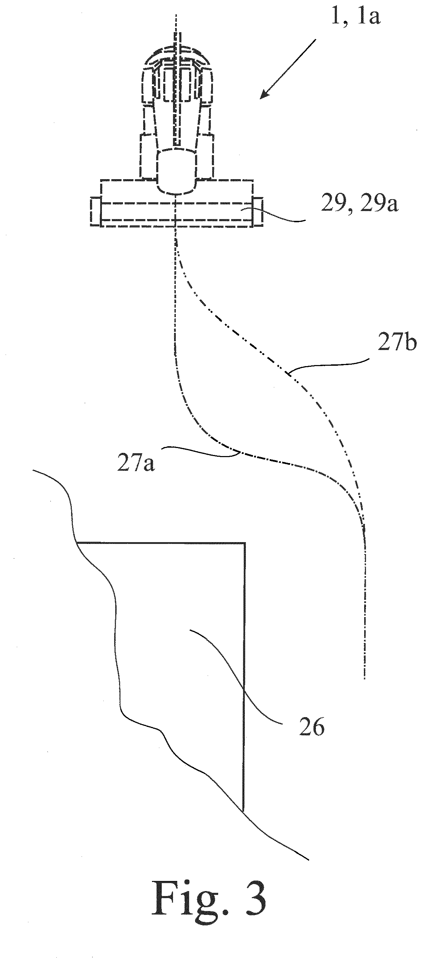

Das vorschlagsgemäße Lenksystem ist für ein landwirtschaftliches Fahrzeug 1, beispielsweise für einen Mähdrescher 1a. Dieses landwirtschaftliche Fahrzeug 1 ist insbesondere in den Fig. 2 und 3 zu erkennen. Das vorschlagsgemäße Lenksystem weist mindestens einen Lenkzylinder 2a, b zur Änderung eines Radeinschlagwinkels 3 des landwirtschaftlichen Fahrzeugs 1 auf.

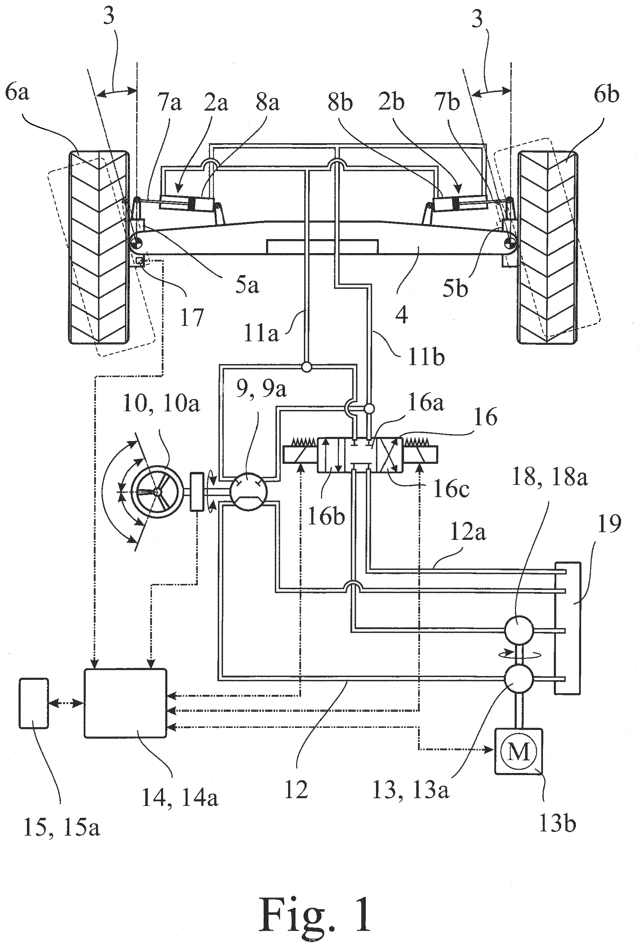

Gemäß der Darstellung in der Fig. 1 wird bei diesem landwirtschaftlichen Fahrzeug 1 die Hinterachse 4 gelenkt, an welcher Radaufnahmen 5a, b mit jeweils einem Rad 6a, b angeordnet sind. Der Radeinschlagwinkel 3 wird nun durch die Lenkzylinder 2a, b vorgegeben - sodass er durch diese änderbar ist - und zwar dadurch, dass eine jeweilige Kolbenstange 7a, b der Lenkzylinder 2a, b mit der jeweiligen Radaufnahme 5a, b und ein jeweiliges Zylindergehäuse 8a, b der Lenkzylinder 2a, b mit der Hinterachse 4 verbunden ist.

Das vorschlagsgemäße Lenksystem weist außerdem ein hydraulisches Hauptlenkventil 9 zur Druckbeaufschlagung des mindestens einen Lenkzylinders 2a, b sowie einen Lenksignalgeber 10 - hier ein Lenkrad 10a - zur Betätigung des Hauptlenkventils 9 auf. Speziell ist das Hauptlenkventil 9 dazu eingerichtet, bei einer Betätigung des Lenksignalgebers 10 aus seiner aktuellen Position, hier also bei einem Drehen des Lenkrads 10a, Hydraulikflüssigkeit entweder in die erste Hydraulikleitung 11a oder in die zweite Hydraulikleitung 11b druckbeaufschlagt einzubringen, wobei die Auswahl der jeweiligen Hydraulikleitung 11a, b, in welche die Hydraulikflüssigkeit eingebracht wird, von der Betätigungsrichtung des Lenksignalgebers 10 abhängt und das Volumen an eingebrachter Hydraulikflüssigkeit von dem Grad der Betätigung abhängt. Die Folge ist eine entsprechende Änderung der Position der Kolbenstangen 7a, b der Lenkzylinder 2a, b - und damit des Radeinschlagwinkels 3 - sowie ein Rückfluss eines entsprechenden Volumens an Hydraulikflüssigkeit aus der jeweils anderen Hydraulikleitung 11a, b durch das Hauptlenkventil 9. Das Hauptlenkventil 9 wird dabei von einem Hauptleitungssystem 12 mit Hydraulikflüssigkeit versorgt, welche von einer Druckversorgungsquelle 13 - hier einer Pumpe 13a, betrieben von einem Pumpenmotor 13b - gefördert wird. Ohne weitere Betätigung des Hauptlenkventils 9 und nach Abschluss der oben beschriebenen Positionsänderung der Kolbenstangen 7a, b wird die Hydraulikflüssigkeit von dem Hauptlenkventil 9 in dem Hauptleitungssystem 12 einfach durchgeleitet.

Das vorschlagsgemäße Lenksystem weist auch eine Lenkhilfe 14 zur Anpassung einer Einstellcharakteristik zwischen dem Lenksignalgeber 10 und dem mindestens einen Lenkzylinder 2a, b auf. Wie oben bereits beschrieben, wird unter dieser Einstellcharakteristik - ganz allgemein - jedwede qualitative oder quantitative Eigenschaft verstanden, welche die Änderung des Radeinschlagwinkels 3 als Folge einer Betätigung des Lenksignalgebers 10 beschreibt. Spezielle Beispiele hierzu werden untenstehend noch erörtert. Da diese Einstellcharakteristik auf die gesamte Wirkkette zwischen Lenksignalgeber 10 und Radeinschlagwinkel 3 bezogen ist, wird sie nicht nur von dem Lenksignalgeber 10 und dem mindestens einen Lenkzylinder 2a, b, sondern auch wesentlich von dem Hauptlenkventil 9 beeinflusst.

Das vorschlagsgemäße Lenksystem weist ebenso eine Sensoranordnung 15 zum Erfassen eines Außensignals des landwirtschaftlichen Fahrzeugs 1 auf.

Das vorschlagsgemäße Lenksystem ist dadurch gekennzeichnet, dass die Lenkhilfe 14 dazu eingerichtet ist, basierend auf dem erfassten Außensignal die Einstellcharakteristik anzupassen. Dabei ist Art und Umfang dieser Anpassung prinzipiell beliebig. Entscheidend ist lediglich, dass sie jedenfalls auch auf dem erfassten Umgebungszustand basiert, wofür untenstehend noch spezielle Beispiele beschrieben werden. Das schließt ausdrücklich die Möglichkeit ein, dass die Anpassung der Einstellcharakteristik auch auf einer Betätigung des Lenksignalgebers 10 basiert.

Vorzugsweise ist die Lenkhilfe 14 dazu eingerichtet, basierend auf dem erfassten Außensignals eine Lenkübersetzung zwischen dem Lenksignalgebers 10 und dem mindestens einen Lenkzylinder 2a, b anzupassen. Insbesondere kann die Lenkhilfe 14 dazu eingerichtet sein, bei Erfassen eines vorbestimmten Außensignals diese Lenkübersetzung zu erhöhen, sodass also bei Betätigung des Lenksignalgebers 10 eine entsprechend größere Verstellung der Lenkzylinder 2a, b und damit des Radeinschlagwinkels 3 erfolgt. Insbesondere kann die Anpassung erfolgen, wenn das erfasste Außensignal eine vorbestimmte Bedingung erfüllt und beispielsweise einen Grenzwert überschreitet. Wenn dieses Außensignal nicht mehr vorliegt, kann die Erhöhung der Lenkübersetzung wieder aufgehoben werden.
Bevorzugt ist ebenso, dass die Lenkhilfe 14 dazu eingerichtet ist, basierend auf dem erfassten Außensignal einen Wendekreisdurchmesser des landwirtschaftlichen Fahrzeugs 1 anzupassen. Der Wendekreisdurchmesser stellt ebenfalls eine Einstellcharakteristik des Lenksignalgebers 10 im obigen Sinne dar.
Die Anpassung der Einstellcharakteristik kann auf spezielle, vorab definierte Situationen bzw. Umgebungszustände zugeschnitten sein. Erfindungsgemäß ist die Lenkhilfe 14 dazu eingerichtet, basierend auf dem erfassten Außensignal eine Voreinstellung aus einer Vielzahl von hinterlegten Voreinstellungen auszuwählen und die Einstellcharakteristik gemäß der ausgewählten Voreinstellung anzupassen. Dabei kann die Lenkhilfe 14 gemäß dem in der Fig. 1 dargestellten Ausführungsbeispiel ein elektronisches Lenkmodul 14a umfassen, welches wiederum einen entsprechenden Datenspeicher aufweist und die Signale von der Sensoranordnung 15 so verarbeitet, dass eine Voreinstellung ausgewählt und die Einstellcharakteristik angepasst wird. Erfindungsgemäß sind die hinterlegten Voreinstellungen jeweils einer Umgebungszustand zugeordnet. Solche Umgebungszustände werden untenstehend noch beispielhaft erörtert.
Gemäß dem in der Fig. 1 dargestellten bevorzugten Ausführungsbeispiel handelt es sich bei dem Hauptlenkventil 9 um ein hydraulisches Hauptlenkventil 9 mit einer festen Ventilübersetzung. Eine feste Ventilübersetzung bedeutet hier, dass der Zusammenhang zwischen der Betätigung des Hauptlenkventils 9 und dem Volumen an eingebrachter Hydraulikflüssigkeit gemäß der obigen Beschreibung konstant ist und also nicht verändert werden kann. Dieser Zusammenhang muss aber nicht linear sein. Insbesondere kann es sich bei dem Hauptlenkventil 9 - ebenfalls wie dargestellt - um ein Orbitrol 9a handeln. Ein Orbitrol 9a hat den Vorteil, dass selbst bei einem Ausfall der Pumpe 13a eine Betätigung des Orbitrols 9a zu einer Zufuhr an Hydraulikflüssigkeit führt und daher auch in einer solchen Situation ein wirksames Lenken des landwirtschaftlichen Fahrzeugs 1 prinzipiell möglich ist.

Gemäß einer alternativen, hier nicht dargestellten Variante, handelt es sich bei dem Hauptlenkventil 9 um ein elektrohydraulisches Hauptlenkventil 9 mit einer elektrisch einstellbaren Ventilübersetzung. Im Gegensatz zu dem obigen Orbitrol 9a kann bei einem elektrohydraulischen Hauptlenkventil 9 die Ventilübersetzung im oben beschriebenen Sinne elektrisch verändert werden. Diese Variante hat den Vorteil, dass die vorschlagsgemäße Anpassung der Einstellcharakteristik rein durch eine elektrische Ansteuerung des Hauptlenkventils 9 verwirklicht werden kann. Speziell kann die Lenkhilfe 14 dazu eingerichtet sein, basierend auf dem erfassten Außensignal die Ventilübersetzung des elektrohydraulischen Hauptlenkventils 9 einzustellen.

Eine bevorzugte und in der Fig. 1 dargestellte Variante sieht vor, dass das Lenksystem ein hydraulisches Zusatzventil 16 zur Druckbeaufschlagung des mindestens einen Lenkzylinders 2a, b umfasst. Dieses hydraulische Zusatzventil 16 wirkt dabei in prinzipiell gleicher Weise wie das Hauptlenkventil 9 mit der ersten Hydraulikleitung 11a und der zweiten Hydraulikleitung 11b zusammen, sodass das hydraulische Zusatzventil 16 analog die Kolbenstangen 7a, b in ihrer Position verändern und damit den Radeinschlagwinkel 3 beeinflussen kann. Die diesbezüglichen Feststellungen oben zum Hauptlenkventil 9 gelten sinngemäß gleich für das hydraulische Zusatzventil 16. Bevorzugt ist, dass es sich gemäß der Darstellung in der Fig. 1 bei dem hydraulischen Zusatzventil 16 ein elektrohydraulisches Zusatzventil handelt. Dieses elektrohydraulische Zusatzventil kann per elektrischer Ansteuerung in eine Sperrstellung 16a, eine erste Schaltstellung 16b oder in eine zweite Schaltstellung 16c gebracht werden. Solange das elektrohydraulische Zusatzventil in der ersten Schaltstellung 16b ist, wird Hydraulikflüssigkeit in die erste Hydraulikleitung 11a eingebracht. Umgekehrt wird, solange das elektrohydraulische Zusatzventil in der ersten Schaltstellung 16b ist, Hydraulikflüssigkeit in die zweite Hydraulikleitung 11b eingebracht. Es erfolgt ein Rückfluss an Hydraulikflüssigkeit über die jeweils andere, erste oder zweite Hydraulikleitung 11a, b. In der Sperrstellung 16a ist das elektrohydraulische Zusatzventil gesperrt. Gemäß einer bevorzugten Ausführungsform ist das hydraulische Zusatzventil 16 dazu eingerichtet, den mindestens einen Lenkzylinder 2a, b mit einem steuerbarem Volumen an Hydraulikflüssigkeit zu beaufschlagen. Diese Steuerung erfolgt dann - wie soeben beschrieben - über die elektrische Einstellung der Dauer, für die sich das hydraulische Zusatzventil 16 in der ersten Schaltstellung 16b oder in der zweiten Schaltstellung 16c befindet. Diese Steuerung kann insbesondere durch das Lenkmodul 14a erfolgen. Auch für den Zweck einer solchen Steuerung weist das vorschlagsgemäße Lenksystem bevorzugt einen Radwinkelsensor 17 zur Erfassung des Radeinschlagwinkels 3 auf, welcher Radwinkelsensor 17 nachrichtentechnisch mit der Lenkhilfe 14 verbunden ist.

Somit ist bevorzugt vorgesehen, dass die Lenkhilfe 14 dazu eingerichtet ist, basierend auf dem erfassten Umgebungszustand das hydraulische Zusatzventil 16 zur Anpassung der Einstellcharakteristik und insbesondere der Lenkübersetzung anzusteuern. Dies kann also dadurch geschehen, dass die Lenkhilfe 14 abhängig vom erfassten Außensignal und der Betätigung des Lenksignalgebers 10 das hydraulische Zusatzventil 16 so ansteuert, dass wahlweise in die erste Hydraulikleitung 11a oder in die zweite Hydraulikleitung 11b mehr Hydraulikflüssigkeit eingebracht wird, als dies nur durch die Betätigung des Hauptlenkventils 9 geschehen würde. Somit erhöht sich die Lenkübersetzung.

Ebenso kann es sein, dass die Lenkhilfe 14 dazu eingerichtet ist, eine Einschlagwinkeleinstellzeit der Lenksignalgebers 10 anzupassen. Prinzipiell kann diese Anpassung durch das Vorsehen und eine entsprechende Ansteuerung des obigen hydraulischen Zusatzventils 16 erfolgen.

Gemäß einer bevorzugten Ausführungsform umfasst das Lenksystem die obige Druckversorgungsquelle 13 mit einstellbarer Leistung, vorzugsweise also die oben genannte Pumpe 13a und den Pumpenmotor 13b, zur Druckversorgung des Hauptlenkventils 9 umfasst. Bei dem Pumpenmotor 13b kann insbesondere die Drehzahl einstellbar sein. Speziell um die Einschlagwinkeleinstellzeit des Lenksignalgebers 10 anzupassen, kann die Lenkhilfe 14 dazu eingerichtet sein, basierend auf dem erfassten Außensignal die Leistung der Druckversorgungsquelle 13 einzustellen, so etwa mittels der Drehzahl des Pumpenmotors 13b.

Gemäß dem in der Fig. 1 dargestellten Ausführungsbeispiel kann das Lenksystem auch eine weitere Druckversorgungsquelle 18 und speziell eine weitere Pumpe 18a zur - von der erstgenannten Druckversorgungsquelle 13 - separaten Druckversorgung des hydraulischen Zusatzventils 16 umfassen. Hier kann dann die Lenkhilfe 14 auch dazu eingerichtet sein, basierend auf dem erfassten Außensignal die Leistung der weiteren Druckversorgungsquelle 18 einzustellen, und zwar vorzugsweise unabhängig von der Leistung der Druckversorgungsquelle 13. Dazu kann - wie in der Fig. 1 dargestellt - ein mit dem Hauptleitungssystem 12 nur durch einen Flüssigkeitstank 19 verbundenes und insoweit unabhängiges Hilfsleitungssystem 12a vorgesehen sein. Die weitere Pumpe 18a kann durch einen eigenen Pumpenmotor oder - wie in der Fig. 1 dargestellt - durch den Pumpenmotor 13b der erstgenannten Druckversorgungsquelle 13 angetrieben werden.

Bezüglich der Sensoranordnung 15 umfasst diese bevorzugt eine elektromagnetische Sensorvorrichtung und dabei vorzugsweise eine Kameravorrichtung 15a - wie in der Fig. 1 dargestellt -, eine Lasersensorvorrichtung und/oder eine Radarvorrichtung.

Wie bereits oben beschrieben, ist insbesondere in einem Vorgewendebereich 20a eines landwirtschaftlichen Feldes 21, wie es hier beispielhaft in der Fig. 2 dargestellt ist, eine Unterstützung des Lenkvorgangs des landwirtschaftlichen Fahrzeugs 1 durch Anpassung der Einstellcharakteristik, insbesondere der Lenkübersetzung, von Vorteil. Umgekehrt bedarf es einer solchen Unterstützung in einem Bestandsbereich 20b des landwirtschaftlichen Feldes 21 nicht oder jedenfalls nur in geringerem Maße. Das gilt auch für einen Straßenbereich 20c, wobei unter diesen Begriff auch alle Bereiche außerhalb von Vorgewendebereichen 20a und Bestandsbereichen 20b verstanden werden können. Daher ist bevorzugt vorgesehen, dass die Sensoranordnung 15 dazu eingerichtet ist, eine Einteilung eines noch zu befahrenden Streckenabschnitts 22 in eine Vielzahl von Geländearten basierend auf dem Außensignal vorzunehmen. Insbesondere kann dann die Einstellcharakteristik basierend auf dieser Einteilung angepasst werden.

Bei diesem zu noch zu befahrenden Streckenabschnitt 22 kann es sich um eine Fläche oder um eine Strecke im geometrischen Sinne handeln, welche einfach in vorzugsweise der aktuellen Fahrtrichtung vor dem landwirtschaftlichen Fahrzeug 1 liegt. Es kann sich bei diesem Streckenabschnitt 22 aber auch um einen Sollfahrspurabschnitt 23 handeln. Unter einem Sollfahrspurabschnitt 23 ist hier ein Streckenabschnitt 22 zu verstehen, welcher auf einer vorgegeben und noch zu befahrenden Sollfahrstrecke 24 für das landwirtschaftliche Fahrzeug 1 liegt, welche Sollfahrstrecke 24 z. B. von einer Routenplanung erstellt wurde. Dieser Sollfahrspurabschnitt 23 kann dann, wie in der Fig. 2 dargestellt, auch versetzt zu der aktuellen Fahrtrichtung des landwirtschaftlichen Fahrzeugs 1 angeordnet sein, wobei dann das Lenkmodul 14 in Kenntnis der Sollfahrstrecke 24 die Sensoranordnung 15 zur Erfassung dieses ggf. versetzten Sollfahrspurabschnitts 23 ausrichten kann. Bevorzugt ist vorgesehen, dass die Vielzahl von Geländearten, in welche die Einteilung vorgenommen wird, einen Vorgewendebereich 20a, einen Bestandsbereich 20b und/oder einen Straßenbereich 20c umfasst.

Eine bevorzugte Möglichkeit der Unterscheidung von verschiedenen Geländearten beruht auf der Erfassung einer Bestandsart und/oder einer Bestandsdichte, was hier der Bestandsdichte eines jeweiligen Ernteguts entspricht. Daher ist bevorzugt vorgesehen, dass die Sensoranordnung 15 dazu eingerichtet ist, eine Bestandsart und/oder eine Bestandsdichte zu erfassen. Dabei kann es sich insbesondere um eine Bestandsart und/oder eine Bestanddichte auf dem noch zu befahrenden Streckenabschnitt 22 oder auf dem Sollfahrspurabschnitt 23 handeln. Bevorzugt erfolgt dann das Vornehmen der obigen Einteilung basierend auf der erfassten Bestandsart und/oder der Bestandsdichte und weiter bevorzugt die Anpassung der Einstellcharakteristik basierend auf dieser Einteilung.

Alternativ kann die Einteilung des noch zu befahrenden Streckabschnitts 23 bzw. des Sollfahrspurabschnitts 23 in die Vielzahl von Geländearten auch auf einer Positionierungsinformation beruhen, wobei dann die Sensoranordnung 15 ein Positionierungssystem, z. B. einen Empfänger für ein Satellitennavigationssystem 25, umfasst. Diese Positionierungsinformation kann dann etwa mit Kartendaten zu den Geländearten oder auch mit der obigen Sollfahrstrecke 24 in Bezug gesetzt werden.

Eine weitere Situation, in der eine Anpassung der Einstellcharakteristik, z. B. durch eine Erhöhung der Lenkübersetzung, von Vorteil ist, tritt ein, wenn das landwirtschaftliche Fahrzeug 1 ein Ausweichmanöver durchführen soll. Ein solches Ausweichmanöver kann einen Hindernis 26 gelten, worunter speziell stationäre Hindernisse 26 verstanden werden können. Die Fig. 2 stellt als solche Hindernisse 26 beispielhaft einen Baum 26a und ein Gebäude 26b dar. Daher ist es bevorzugt, dass die Sensoranordnung 15 dazu eingerichtet ist, ein Hindernis 26 in einem noch zu befahrenden Streckenabschnitt 22, bei dem es sich bevorzugt um einen Sollfahrspurabschnitt 23 handeln kann, zu erfassen. Bevorzugt basiert dann die Anpassung der Einstellcharakteristik auf dem erfassten Hindernis 26. Hier ist es weiter bevorzugt, dass die Lenkhilfe 14 dazu eingerichtet ist, basierend auf dem erfassten Hindernis 26 die Einstellcharakteristik so anzupassen, dass eine unbearbeitete Flächengröße optimiert wird, wobei diese Optimierung insbesondere eine Minimierung sein kann. Unter dieser unbearbeiteten Flächengröße ist diejenige Fläche des landwirtschaftlichen Feldes 21 und insbesondere des Bestandsbereiches 20b zu verstehen, welche wegen des Hindernisses 26 durch das landwirtschaftliche Fahrzeug 1 unbearbeitet bleibt.

Die Fig. 3 zeigt anschaulich, wie ein landwirtschaftliches Fahrzeug 1 durch eine solche Erfassung eines Hindernisses 26 und ein vorschlagsgemäßes Lenksystem die Einstellcharakteristik im obigen Sinne so anpassen kann, dass es zum Ausweichen vor dem Hindernis 26 eine verbesserte Ausweichspur 27a abfahren kann. Diese verbesserte Ausweichspur 27a erlaubt gegenüber der herkömmlichen Ausweichspur 27b ein dichteres Heranfahren an das Hindernis 26 und reduziert insofern die nicht oder nur ineffektiv zu bearbeitende Fläche des landwirtschaftlichen Felds 21 um das Hindernis 26 herum. Möglich wird dies insbesondere durch eine Erhöhung der Lenkübersetzung und eine Verringerung der Einschlagwinkeleinstellzeit auf die Erkennung des Hindernisses 26.

Ein Ausweichen kann aber nicht nur bei solchen stationären Hindernissen 26, sondern auch gegenüber einem anderen Fahrzeug - welches hier und nachfolgend als Fremdfahrzeug 28 bezeichnet wird - erforderlich sein. Daher ist bevorzugt vorgesehen, dass die Sensoranordnung 15 dazu eingerichtet ist, ein insbesondere landwirtschaftliches Fremdfahrzeug 28 erfassen. Beispielhaft für ein solches Fremdfahrzeug 28 ist in der Fig. 2 ein Korntransportfahrzeug 28a im Vorgewendebereich 20a dargestellt. Vorzugsweise ist die Sensoranordnung 15 dazu eingerichtet ist, einen Abstand zu dem Fremdfahrzeug 28 zu erfassen. Bevorzugt basiert dann die Anpassung der Einstellcharakteristik auf dem erfassten Fremdfahrzeug 28 bzw. auf den erfassten Abstand zu dem Fremdfahrzeug 28.

Die Anpassung der Einstellcharakteristik muss - wie bereits oben festgestellt - aber nicht ausschließlich durch das erfasste Außensignal vorgegeben werden, sondern lediglich auf ihm basieren. Speziell bei den oben beschriebenen Ausweichmanövern gegenüber Hindernissen 26 oder Fremdfahrzeugen 28 kann es sinnvoll sein, die Einstellcharakteristik zusätzlich basierend auf einer Geometrie, einer Fahrgeschwindigkeit oder einer, insbesondere zum Hindernis 26 oder zum Fremdfahrzeug 28 relativen, Ausrichtung des landwirtschaftlichen Fahrzeugs 1 anzupassen.

Es ist auch möglich, anhand des Zustandes bestimmter Arten von Arbeitsgeräten, ggf. in Kombination mit weiteren Zustandsinformationen, zu erkennen, in was für einer Geländeart, z. B. in einem Vorgewendebereich 20a, sich das landwirtschaftliche Fahrzeug 1 aktuell befindet. So wird ein Erntevorsatz bei Erntemaschinen im Vorgewende regelmäßig angehoben. Daher kann bei einem ausgehobenen solchen Erntevorsatz bei gleichzeitiger Drehzahl eines Hauptmotors des landwirtschaftlichen Fahrzeugs 1 in einem Arbeitsdrehzahlbereich - statt eines Leerlaufdrehzahlbereichs - davon ausgegangen werden, dass sich das landwirtschaftliche Fahrzeug 1 in einem Vorgewendebereich 20a befindet. Folglich ist bevorzugt vorgesehen, dass die Sensoranordnung 15 dazu eingerichtet ist, ein Zustandssignal, insbesondere ein Arbeitspositionssignal, eines mit dem landwirtschaftlichen Fahrzeug 1 trennbar gekoppelten Arbeitsgerätes 29, vorzugsweise eines Vorsatzes 29a, zu erfassen. Unter einem solchen Arbeitspositionssignal ist also ein Signal zu verstehen, welches eine jeweilige Betriebsposition, worunter z. B. eine Arbeitsposition, eine Transportposition, oder eine Wartungsposition fallen könnte, des Arbeitsgerätes 29 anzeigt. Vorzugsweise basiert dann die Anpassung der Einstellcharakteristik auf dem erfassten Zustandssignal bzw. Arbeitspositionssignal. Aus der obigen trennbaren Kopplung folgt, dass es sich bei dem Zustandssignal und insbesondere dem Arbeitspositionssignal um ein Außensignal handelt.

### Bezugszeichenliste

- 1: landwirtschaftliches Fahrzeug
- 1a: Mähdrescher
- 2a, b: Lenkzylinder
- 3: Radeinschlagwinkel
- 4: Hinterachse
- 5a, b: Radaufnahme
- 6a, b: Rad
- 7a, b: Kolbenstange
- 8a, b: Zylindergehäuse
- 9: Hauptlenkventil
- 10: Lenksignalgeber
- 10a: Lenkrad
- 11a, b: Hydraulikleitung
- 12: Hauptleitungssystem
- 12a: Hilfsleitungssystem
- 13: Druckversorgungsquelle
- 13a: Pumpe
- 13b: Pumpenmotor
- 14: Lenkhilfe
- 14a: Lenkmodul
- 15: Sensoranordnung
- 16: Zusatzventil
- 16a: Sperrstellung
- 16b, c: Schaltstellungen
- 17: Radwinkelsensor
- 18: weitere Druckversorgungsquelle
- 18a: weitere Pumpe
- 19: Flüssigkeitstank
- 20a: Vorgewendebereich
- 20b: Bestandsbereich
- 20c: Straßenbereich
- 21: landwirtschaftliches Feld
- 22: Streckenabschnitt
- 23: Sollfahrspurabschnitt
- 24: Sollfahrstrecke
- 25: Satellitennavigationssystem
- 26: Hindernis
- 26a: Baum
- 26b: Gebäude
- 27a: verbesserte Ausweichspur
- 27b: herkömmliche Ausweichspur
- 28: Fremdfahrzeug
- 28a: Korntransportfahrzeug
- 29: Arbeitsgerät
- 29a: Vorsatz

## Patentansprüche

1. Lenksystem für ein landwirtschaftliches Fahrzeug (1) mit mindestens einem Lenkzylinder (2a, b) zur Änderung eines Radeinschlagwinkels (3) des landwirtschaftlichen Fahrzeugs (1), mit einem hydraulischen Hauptlenkventil (9) zur Druckbeaufschlagung des mindestens einen Lenkzylinders (2a, b), mit einem Lenksignalgeber (10) zur Betätigung des Hauptlenkventils (9), mit einer Lenkhilfe (14) zur Anpassung einer Einstellcharakteristik zwischen dem Lenksignalgeber (10) und dem mindestens einen Lenkzylinder (2a, b) und mit einer Sensoranordnung (15) zum Erfassen eines Außensignals des landwirtschaftlichen Fahrzeugs (1),
**dadurch gekennzeichnet,**
**dass** die Lenkhilfe (14) dazu eingerichtet ist, basierend auf dem erfassten Außensignal die Einstellcharakteristik anzupassen und wobei die Lenkhilfe (14) weiter dazu eingerichtet ist, basierend auf dem erfassten Außensignal eine Voreinstellung aus einer Vielzahl von hinterlegten Voreinstellungen auszuwählen, welche hinterlegten Voreinstellungen jeweils einem Umgebungszustand zugeordnet sind, und die Einstellcharakteristik gemäß der ausgewählten Voreinstellung anzupassen.

2. Lenksystem nach Anspruch 1, **dadurch gekennzeichnet, dass** die Lenkhilfe (14) dazu eingerichtet ist, basierend auf dem erfassten Außensignal eine Lenkübersetzung zwischen dem Lenksignalgeber (10) und dem mindestens einen Lenkzylinder (2a, b) anzupassen.

3. Lenksystem nach Anspruch 1 oder 2, **dadurch gekennzeichnet, dass** die Lenkhilfe (14) dazu eingerichtet ist, basierend auf dem erfassten Außensignal einen Wendekreisdurchmesser des landwirtschaftlichen Fahrzeugs (1) anzupassen.

4. Lenksystem nach einem der Ansprüche 1 bis 3, **dadurch gekennzeichnet, dass** das Hauptlenkventil (9) ein hydraulisches Hauptlenkventil (9) mit einer festen Übersetzung ist, vorzugsweise ein Orbitrol (9a) ist, oder dass das Hauptlenkventil (9) ein elektrohydraulisches Hauptlenkventil (9) mit einer elektrisch einstellbaren Ventilübersetzung ist, insbesondere, dass die Lenkhilfe (14) dazu eingerichtet ist, basierend auf dem erfassten Außensignal die Ventilübersetzung des elektrohydraulischen Hauptlenkventils 9 einzustellen.

5. Lenksystem nach einem der Ansprüche 1 bis 4, **dadurch gekennzeichnet, dass** das Lenksystem ein hydraulisches Zusatzventil (16) zur Druckbeaufschlagung des mindestens einen Lenkzylinders (2a, b) umfasst, vorzugsweise, dass das hydraulische Zusatzventil (16) ein elektrohydraulisches Zusatzventil ist, insbesondere, dass das hydraulische Zusatzventil (16) dazu eingerichtet ist, den mindestens einen Lenkzylinder (2a, b) mit einem steuerbarem Volumen an Hydraulikflüssigkeit zu beaufschlagen.

6. Lenksystem nach Anspruch 5, **dadurch gekennzeichnet, dass** die Lenkhilfe (14) dazu eingerichtet ist, basierend auf dem erfassten Außensignal das hydraulische Zusatzventil (16) zur Anpassung der Einstellcharakteristik, vorzugsweise der Lenkübersetzung, anzusteuern.

7. Lenksystem nach einem der Ansprüche 1 bis 5, **dadurch gekennzeichnet, dass** die Lenkhilfe (14) dazu eingerichtet ist, eine Einschlagwinkeleinstellzeit des Lenksignalgebers (10) anzupassen.

8. Lenksystem nach einem der Ansprüche 1 bis 7, **dadurch gekennzeichnet, dass** das Lenksystem eine Druckversorgungsquelle (13) mit einstellbarer Leistung, vorzugsweise eine Pumpe (13a) und einen Pumpenmotor (13b), insbesondere mit einstellbarer Drehzahl, zur Druckversorgung des Hauptlenkventils (9) umfasst, insbesondere, dass die Lenkhilfe (14) dazu eingerichtet ist, basierend auf dem erfassten Außensignal die Leistung der Druckversorgungsquelle (13) einzustellen.

9. Lenksystem nach einem der Ansprüche 1 bis 9, **dadurch gekennzeichnet, dass** die Sensoranordnung (15) eine elektromagnetische Sensorvorrichtung, vorzugsweise eine Kameravorrichtung (15a), eine Lasersensorvorrichtung und/oder eine Radarvorrichtung umfasst.

10. Lenksystem nach einem der Ansprüche 1 bis 9, **dadurch gekennzeichnet, dass** die Sensoranordnung (15) dazu eingerichtet ist, eine Einteilung eines noch zu befahrenden Streckenabschnitts (22), vorzugsweise, eines Sollfahrspurabschnitts (23), in eine Vielzahl von Geländearten basierend auf dem Außensignal vorzunehmen, vorzugsweise, dass die Vielzahl von Geländearten einen Vorgewendebereich (20a), einen Bestandsbereich (20b) und/oder einen Straßenbereich (20c) umfasst.

11. Lenksystem nach einem der Ansprüche 1 bis 10, **dadurch gekennzeichnet, dass** die Sensoranordnung (15) dazu eingerichtet ist, eine Bestandsdichte zu erfassen, vorzugsweise, eine Bestanddichte auf einem noch zu befahrenden Streckenabschnitt (22), insbesondere auf einem Sollfahrspurabschnitt (23), zu erfassen.

12. Lenksystem nach einem der Ansprüche 1 bis 11, **dadurch gekennzeichnet, dass** die Sensoranordnung (15) dazu eingerichtet ist, ein Hindernis (26) in einem noch zu befahrenden Streckenabschnitt (22), vorzugsweise, einem Sollfahrspurabschnitt (24), zu erfassen, vorzugsweise, dass die Lenkhilfe (14) dazu eingerichtet ist, basierend auf dem erfassten Hindernis (26) die Einstellcharakteristik so anzupassen, dass eine unbearbeitete Flächengröße optimiert, insbesondere minimiert, wird.

13. Lenksystem nach einem der Ansprüche 1 bis 12, **dadurch gekennzeichnet, dass** die Sensoranordnung (15) dazu eingerichtet ist, ein insbesondere landwirtschaftliches Fremdfahrzeug (28), insbesondere einen Abstand zu dem Fremdfahrzeug (28), zu erfassen.

14. Lenksystem nach einem der Ansprüche 1 bis 13, **dadurch gekennzeichnet, dass** die Sensoranordnung (15) dazu eingerichtet ist, ein Zustandssignal, insbesondere ein Arbeitspositionssignal, eines mit dem landwirtschaftlichen Fahrzeug (1) trennbar gekoppelten Arbeitsgerätes (29), vorzugsweise eines Vorsatzes (29a), zu erfassen.

## Claims

1. A steering system for an agricultural vehicle (1) comprising at least one steering cylinder (2a, b) for changing a steering angle (3) of the agricultural vehicle (1), a hydraulic main steering valve (9) for pressure actuation of the at least one steering cylinder (2a, b), a steering signalling device (10) for actuation of the main steering valve (9), a steering assistance (14) for adapting an adjustment characteristic between the steering signalling device (10) and the at least one steering cylinder (2a, b), and a sensor arrangement (15) for detecting an external signal of the agricultural vehicle (1),
**characterised in that**
the steering assistance (14) is designed to adapt the adjustment characteristic based on the detected external signal and wherein the steering assistance (14) is further designed to select a default setting from a plurality of stored default settings, based on the detected external signal, which stored default settings are respectively associated with an environmental state, and to adapt the adjustment characteristic in accordance with the selected default setting.,

2. A steering system according to claim 1 **characterised in that** the steering assistance (14) is designed to adapt a steering transmission ratio between the steering signalling device (10) and the at least one steering cylinder (2a, b) based on the detected external signal.

3. A steering system according to claim 1 or claim 2 **characterised in that** the steering assistance (14) is designed to adapt a turning circle diameter of the agricultural vehicle (1) based on the detected external signal.

4. A steering system according to one of claims 1 to 3 **characterised in that** the main steering valve (9) is a hydraulic main steering valve (9) with a fixed transmission ratio, preferably an Orbitrol (9a) or that the main steering valve (9) is an electrohydraulic main steering valve (9) having an electrically adjustable valve transmission ratio, in particular that the steering assistance (14) is designed to adjust the valve transmission ratio of the electrohydraulic main steering valve (9) based on the detected external signal.

5. A steering system according to one of claims 1 to 4 **characterised in that** the steering system includes an additional hydraulic valve (16) for pressure actuation of the at least one steering cylinder (2a, b), preferably that the additional hydraulic valve (16) is an additional electrohydraulic valve, in particular that the additional hydraulic valve (16) is designed to actuate the at least one steering cylinder (2a, b) with a controllable volume of hydraulic fluid.

6. A steering system according to claim 5 **characterised in that** the steering assistance (14) is designed to operate the additional hydraulic valve (16) for adaptation of the adjustment characteristic, preferably the steering transmission ratio, based on the detected external signal.

7. A steering system according to one of claims 1 to 5 **characterised in that** the steering assistance (14) is designed to adapt a steering angle adjustment time of the steering signalling device (10).

8. A steering system according to one of claims 1 to 7 **characterised in that** the steering system includes a pressure supply source (13) of adjustable output, preferably a pump (13a), and a pump motor (13b), in particular with an adjustable speed, for supplying pressure to the main steering valve (9) and in particular that the steering assistance (14) is designed to adjust the output of the pressure supply source (13) based on the detected external signal.

9. A steering system according to one of claims 1 to 8 **characterised in that** the sensor arrangement (15) includes an electromagnetic sensor device, preferably a camera device (15a), a laser sensor device and/or a radar device.

10. A steering system according to one of claims 1 to 9 **characterised in that** the sensor arrangement (15) is designed to effect division of a path portion (22) which is still to be driven over, preferably a target travel track portion (23), into a plurality of kinds of terrain based on the external signal, and preferably that the plurality of kinds of terrain includes a headland region (20a), a crop stand region (20b) and/or an on-road region (20c).

11. A steering system according to one of claims 1 to 10 **characterised in that** the sensor arrangement (15) is designed to detect a crop stand density, and preferably to detect a crop stand density on a path path (22) which is still to be driven over, in particular on a target travel track portion (23).

12. A steering system according to one of claims 1 to 11 **characterised in that** the sensor arrangement (15) is designed to detect an obstacle (26) in a path portion (22) which is still to be driven over, preferably a target travel track portion (24), and preferably that the steering assistance (14) is designed to adapt the adjustment characteristic in such a way that an unworked surface area is optimised, in particular minimised, based on the detected obstacle (26).

13. A steering system according to one of claims 1 to 12 **characterised in that** the sensor arrangement (15) is designed to detect an in particular agricultural other vehicle (28), in particular a distance in relation to another vehicle (28).

14. A steering system according to one of claims 1 to 13 **characterised in that** the sensor arrangement (15) is designed to detect a state signal, in particular a working position signal, of a working implement (29) separably coupled to the agricultural vehicle (1), preferably a front-mounted attachment (29a).

## Revendications

1. Système de direction pour un véhicule agricole (1) comprenant au moins un vérin de direction (2a, b) pour modifier l'angle de braquage de roue (3) du véhicule agricole (1), comprenant une soupape hydraulique principale de direction (9) pour mettre en pression le au moins un vérin de direction (2a, b), comprenant un transmetteur de signal de direction (10) pour actionner la soupape principale de direction (9), comprenant une assistance de direction (14) pour adapter une caractéristique de réglage entre le transmetteur de signal de direction (10) et le au moins un vérin de direction (2a, b), et comprenant un agencement de capteur (15) pour détecter un signal extérieur du véhicule agricole (1), **caractérisé en ce que** l'assistance de direction (14) est agencée pour adapter la caractéristique de réglage sur la base du signal extérieur détecté, et l'assistance de direction (14) étant également agencée pour sélectionner, sur la base du signal extérieur détecté, un préréglage parmi une pluralité de préréglages mémorisés, lesdits préréglages mémorisés étant chacun associés à un état ambiant, et pour adapter la caractéristique de réglage selon le préréglage sélectionné.

2. Système de direction selon la revendication 1, **caractérisé en ce que** l'assistance de direction (14) est agencée pour adapter, sur la base du signal extérieur détecté, un rapport de direction entre le transmetteur de signal de direction (10) et le au moins un vérin de direction (2a, b).

3. Système de direction selon la revendication 1 ou 2, **caractérisé en ce que** l'assistance de direction (14) est agencée pour adapter un diamètre de cercle de braquage du véhicule agricole (1) sur la base du signal extérieur détecté.

4. Système de direction selon une des revendications 1 à 3, **caractérisé en ce que** la soupape principale de direction (9) est une soupape hydraulique principale de direction (9) à rapport fixe, de préférence un orbitrol (9a), ou **en ce que** la soupape principale de direction (9) est une soupape électrohydraulique principale de direction (9) avec un rapport de soupape réglable électriquement, en particulier **en ce que** l'assistance de direction (14) est agencée pour régler le rapport de soupape de la soupape électrohydraulique principale de direction 9 sur la base du signal extérieur détecté.

5. Système de direction selon une des revendications 1 à 4, **caractérisé en ce que** le système de direction comprend une soupape supplémentaire hydraulique (16) pour mettre en pression le au moins un vérin de direction (2a, b), de préférence **en ce que** la soupape supplémentaire hydraulique (16) est une soupape supplémentaire électrohydraulique, en particulier **en ce que** la soupape supplémentaire hydraulique (16) est agencée pour solliciter le au moins un vérin de direction (2a, b) avec un volume commandable de liquide hydraulique.

6. Système de direction selon la revendication 5, **caractérisé en ce que** l'assistance de direction (14) est agencée pour commander, sur la base du signal extérieur détecté, la soupape supplémentaire hydraulique (16) pour adapter la caractéristique de réglage, de préférence le rapport de direction.

7. Système de direction selon une des revendications 1 à 5, **caractérisé en ce que** l'assistance de direction (14) est agencée pour adapter un temps de réglage d'angle de braquage du transmetteur de signal de direction (10).

8. Système de direction selon une des revendications 1 à 7, **caractérisé en ce que** le système de direction comprend une source d'alimentation en pression (13) à puissance réglable, de préférence une pompe (13a) et une pompe-moteur (13b), en particulier à vitesse de rotation réglable, pour alimenter en pression la soupape principale de direction (9), en particulier **en ce que** l'assistance de direction (14) est agencée pour régler la puissance de la source d'alimentation en pression (13) sur la base du signal extérieur détecté.

9. Système de direction selon une des revendications 1 à 9, **caractérisé en ce que** l'agencement de capteur (15) comprend un dispositif de capteur électromagnétique, de préférence un dispositif de caméra (15a), un dispositif de capteur laser et/ou un dispositif radar.

10. Système de direction selon une des revendications 1 à 9, **caractérisé en ce que** l'agencement de capteur (15) est agencé pour procéder, sur la base du signal extérieur, à une division d'une portion de trajet (22) restant à parcourir, de préférence, d'une portion de trace de passage de consigne (23), en une pluralité de types de terrain, de préférence **en ce que** la pluralité de types de terrain englobe une zone de tournière (20a), une zone de culture (20b) et/ou une zone de route (20c) .

11. Système de direction selon une des revendications 1 à 10, **caractérisé en ce que** l'agencement de capteur (15) est agencé pour détecter une densité de culture, de préférence une densité de culture sur la portion de trajet (22) restant à parcourir, en particulier sur une portion de trace de passage de consigne (23).

12. Système de direction selon une des revendications 1 à 11, **caractérisé en ce que** l'agencement de capteur (15) est agencé pour détecter un obstacle (26) dans une portion de trajet (22) restant à parcourir, de préférence dans une portion de trace de passage de consigne (24), de préférence **en ce que** l'assistance de direction (14) est agencée pour adapter la caractéristique de réglage sur la base de l'obstacle (26) détecté, de façon à optimiser, en particulier minimaliser, une superficie non travaillée.

13. Système de direction selon une des revendications 1 à 12, **caractérisé en ce que** l'agencement de capteur (15) est agencé pour détecter un véhicule étranger (28), en particulier agricole, en particulier une distance au véhicule étranger (28) .

14. Système de direction selon une des revendications 1 à 13, **caractérisé en ce que** l'agencement de capteur (15) est agencé pour capter un signal d'état, en particulier un signal de position de travail, d'un appareil de travail (29) couplé de façon séparable au véhicule agricole (1), de préférence d'un équipement frontal (29a).
